(19) **Europäisches Patentamt European Patent Office Office européen des brevets**

(11) **EP 4 704 204 A1**

(12) **EUROPEAN PATENT APPLICATION**

(43) Date of publication:
04.03.2026 Bulletin 2026/10

(21) Application number: 25198619.6

(22) Date of filing: 28.08.2025

(51) International Patent Classification (IPC):
$H01M\ 10/0525$ (2010.01)    $H01M\ 10/42$ (2006.01)
$H01M\ 50/409$ (2021.01)    $H01M\ 50/414$ (2021.01)
$H01M\ 50/446$ (2021.01)    $H01M\ 50/451$ (2021.01)
$H01M\ 50/489$ (2021.01)

(52) Cooperative Patent Classification (CPC):
H01M 10/0525; H01M 10/4235; H01M 50/409;
H01M 50/414; H01M 50/446; H01M 50/451;
H01M 50/489; Y02E 60/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 28.08.2024  CN 202411188012

(71) Applicant: Ningde Amperex Technology Ltd.
Ningde City, Fujian Province 352100 (CN)

(72) Inventor: CHEN, Minjing
Ningde City, Fujian Province, China, 352100 (CN)

(74) Representative: Icosa
83 avenue Denfert-Rochereau
75014 Paris (FR)

(54) **SEPARATOR, ELECTROCHEMICAL APPARATUS AND ELECTRONIC DEVICE**

(57)    A separator comprises aluminum atoms and fluorine atoms, and in a 2 $\mu$m $\times$ 2 $\mu$m region, a ratio A of atomic percentages of the aluminum atoms to the fluorine atoms satisfies $1 \leq A \leq 4$. The separator includes a substrate, and the surface of the substrate is provided with a coating. The coating includes a plurality of spaced stripes, and an average spacing between two adjacent stripes is 1 mm to 3 mm. The separator provided in this application can improve the high-temperature cycle performance, low-temperature intermittent cycle performance, and thermal safety performance of the electrochemical apparatus.

**Description**

**TECHNICAL FIELD**

This application relates to the field of electrochemical energy storage, and in particular, to a separator, an electrochemical apparatus, and an electronic device.

**BACKGROUND**

With technological advancements, electrochemical apparatuses are widely used in energy storage power systems such as hydropower, thermal power, wind power, and solar power stations, as well as in various fields including electric tools, electric bicycles, electric motorcycles, electric vehicles, special equipment, and special aerospace applications. Currently, there are increasing demands for the application scenarios of electrochemical apparatuses. For example, under high-temperature and low-temperature conditions, electrochemical apparatuses are required to have certain puncture resistance and also have excellent electrochemical performance.

**SUMMARY**

This application provides a separator, an electrochemical apparatus, and an electronic device.

A first aspect of this application provides a separator. The separator contains aluminum atoms and fluorine atoms. In a $2\,\mu m \times 2\,\mu m$ region, a ratio A of atomic percentages of the aluminum atoms to the fluorine atoms satisfies $1 \leq A \leq 4$. The separator includes a substrate, a surface of the substrate is provided with a coating, the coating includes a plurality of spaced stripes, and an average spacing between two adjacent stripes is 1 mm to 3 mm. In this application, the average spacing refers to an average spacing obtained by taking a linear distance along a width direction of the separator between center points of two adjacent stripes, referred to as a stripe group, along the width direction of the separator as a spacing and then calculating a mean value of spacings of 5 different stripe groups. In the separator provided by this application, the surface of the separator has the appropriate atomic percentages of the aluminum atoms and the fluorine atoms, which can effectively improve the puncture resistance of the separator at 35°C. When the content of the aluminum atoms is excessively high and the ratio A is large, a risk of the separator being punctured exists. Therefore, a separator that satisfies the atomic species and proportions within this range can effectively reduce the short-circuit risk of the electrochemical apparatus. Meanwhile, when the fluorine atoms and aluminum atoms on the separator satisfy this range, a certain protective effect on the surface of the separator is achieved, thereby improving the thermal safety performance of the electrochemical apparatus. Meanwhile, the fluorine atoms can effectively improve the affinity between the surface of the separator and the electrolyte solution, which is more conducive to improving the liquid retention capability of the electrochemical apparatus during cycling, thereby improving the high-temperature cycle performance of the electrochemical apparatus. When the atomic percentages of the aluminum atoms and the fluorine atoms are within the above range, the overcharge protection performance of the electrochemical apparatus can be improved, thereby improving the safety performance of the electrochemical apparatus. In combination with the design of the coating including the strips, the liquid retention capacity of the electrochemical apparatus can be further effectively improved, thereby further improving the low-temperature intermittent cycle performance of the electrochemical apparatus. When the average spacing between two adjacent stripes falls within an appropriate range, it is conducive to improving the interface bonding force between the separator and the positive/negative electrode plates, thereby being conducive to further improving the low-temperature intermittent cycle performance, high-temperature cycle performance, and overcharge protection performance at high temperatures of the electrochemical apparatus.

Based on the first aspect, in some embodiments, $2 \leq A \leq 3$. The separator satisfying the above condition can further improve the puncture resistance of the separator at 35°C, further reduce the short-circuit risk of the electrochemical apparatus, and improve the thermal safety performance of the electrochemical apparatus.

Based on the first aspect, in some embodiments, the average spacing between the stripes on the separator of this application is $1.2\,\mu m$ to 2.5 mm. The separator satisfying the above condition can further improve the liquid retention capacity of the electrochemical apparatus, and meanwhile, can further increase the transport rate of lithium ions, and improve both the low-temperature intermittent cycle performance and the overcharge protection performance of the electrochemical apparatus.

Based on the first aspect, in some embodiments, a thickness of the stripes on the separator is $0.5\,\mu m$ to $2\,\mu m$. The separator satisfying the above condition can further improve the high-temperature cycle performance and the overcharge protection performance of the electrochemical apparatus.

Based on the first aspect, in some embodiments, based on a mass of the coating, the atomic percentage X of the aluminum atoms on the separator satisfies: $17 \leq X \leq 28$, and/or, the atomic percentage Y of the fluorine atoms satisfies: $7 \leq Y \leq 21$. By controlling the atomic percentage of the aluminum atoms or the fluorine atoms within the above range, it is conducive to maintaining a certain structural strength of the separator, effectively improving the puncture resistance at 35°C, reducing the short-circuit risk of the electrochemical apparatus, and improving the structural stability of the electrochemical apparatus. If the atomic percentage of the aluminum atoms is too high, it will affect the transport of the lithium ions in the electrochemical apparatus and affect the high-temperature cycle performance of the electrochemical apparatus. Controlling the atomic percentage of the fluorine atoms within the above range can effectively improve the affinity between the separator and the electrolyte solution, which is more conducive to improving the liquid retention capability of the electrochemical apparatus during high-temperature cycling, thereby further improving the high-temperature cycle performance of the electrochemical apparatus.

Based on the first aspect, in some embodiments, in a 1 mm × 1 mm region, a coverage rate of the coating on the surface of the substrate is 15% to 25%. When the above range is satisfied, the coating can effectively improve the liquid retention capacity of the electrochemical apparatus, thereby improving the high-temperature cycle performance and the low-temperature intermittent cycle performance of the electrochemical apparatus.

Based on the first aspect, in some embodiments, at 35°C, a ratio B of puncture strength of the separator to puncture strength of the substrate satisfies: $1.1 \leq B \leq 2.0$. It is conducive to improving the overall mechanical performance of the separator, and improving the high-temperature cycle performance and the low-temperature intermittent cycle performance of the separator, as well as the overcharge protection performance of the electrochemical apparatus at high temperatures.

A second aspect of this application provides an electrochemical apparatus. The electrochemical apparatus includes a positive electrode plate, a negative electrode plate, and the above separator, and the separator is disposed between the positive electrode plate and the negative electrode plate.

Based on the second aspect, in some embodiments, the positive electrode plate includes a positive electrode material, and at 40°C, a dry pressing bonding force F between the coating and the positive electrode material satisfies: $2 \text{ N/m} \leq F \leq 6.5 \text{ N/m}$. It is conducive to improving the bonding strength between the coating and the positive electrode material, and improving the thermal safety performance of the electrochemical apparatus. Too high bonding strength does not facilitate the transport of active ions, and too low bonding strength will affect the overall structural stability and energy density of the electrochemical apparatus, easily resulting in interfacial side reactions and generating additional gas. Therefore, the appropriate dry pressing bonding force satisfying this application is conducive to improving the thermal safety performance of the electrochemical apparatus while alleviating gas generation at an interface and reducing the amount of gas generated at the interface.

Based on the second aspect, in some embodiments, the positive electrode plate includes a positive electrode material, and a ratio D of Dv50 / Dn10 of the positive electrode material satisfies: $20 \leq D \leq 45$. It is conducive to reducing the possibility of the positive electrode material puncturing the separator, thereby reducing the short-circuit risk of the electrochemical apparatus and improving the thermal safety performance of the electrochemical apparatus at high temperatures. Additionally, the specific surface area is controlled by controlling the particle size range of the positive electrode material, thereby reducing side reactions and alleviating gas generation at the interface.

Based on the second aspect, in some embodiments, the electrochemical apparatus of this application further includes an electrolyte solution, the electrolyte solution includes a nitrile additive and propylene carbonate (PC), and a ratio E of a mass of the nitrile additive to a mass of the propylene carbonate (PC) satisfies: $1 \leq E \leq 5$. The nitrile additive includes succinonitrile, adiponitrile, acetonitrile, and ethylene glycol diethyl ether. When the electrolyte solution satisfies the range specified in this application, it is conducive to reducing the formation of by-products in the electrolyte solution, further improving direct current impedance at high and low temperatures, reducing the amount of gas generated by the electrochemical apparatus at high temperatures, reducing overall expansion of the electrochemical apparatus, and improving the thermal safety performance of the electrochemical apparatus.

Based on the second aspect, in some embodiments, the ratio E of the mass of the nitrile additive to the mass of the organic solvent PC satisfies: $1 \leq E \leq 3$. It is conducive to further reducing direct current impedance at high and low temperatures, reducing the amount of gas generated by the electrochemical apparatus at high temperatures, reducing overall expansion of the electrochemical apparatus during charge/discharge, and improving the thermal safety performance of the electrochemical apparatus.

Based on the second aspect, in some embodiments, the electrolyte solution further includes triphenylphosphine oxide, and a mass of the triphenylphosphine oxide accounts for x% of a total mass of the electrolyte solution, where $0 \leq x \leq 4.5$. When the mass percentage of the triphenylphosphine oxide in the electrolyte solution falls within the above range, the triphenylphosphine oxide participates in forming a uniform and dense solid electrolytic interfacial film at a cathode-electrolyte solution interface after 5 cycles of the electrochemical apparatus. The solid electrolytic interfacial film has a thickness of 10 μm to 150 μm and can capture gas molecules such as HF at the interface, thereby reducing the amount of gas generated at the interface of the electrochemical apparatus. Meanwhile, the interphase film can improve the interface stability of the positive electrode material, thereby improving the thermal safety performance of the electrochemical apparatus.

Based on the second aspect, in some embodiments, the electrolyte solution further includes biphenyl, and a mass of the biphenyl in the electrolyte solution accounts for y% of the total mass of the electrolyte solution, where $0.4 \leq y \leq 1.8$. It can suppress the preferential oxidative decomposition of a carbonate electrolyte solution and inhibit gas generation at the interface. When the electrolyte solution contains both biphenyl and triphenylphosphine oxide, the biphenyl and the triphenylphosphine oxide jointly participate in the formation of the solid electrolytic interfacial film. A thickness of the resulting solid electrolytic interfacial film is 100 $\mu$m to 400 $\mu$m at the interface, which can further suppress side reactions at the interface, reduces the amount of gas generated at the interface, and further improve the thermal safety performance of the electrochemical apparatus.

A third aspect of this application provides an electronic device. The electronic device includes the above electrochemical apparatus.

The separator provided in this application exhibits excellent intrinsic structural strength and stability, which can improve the thermal safety performance of the electrochemical apparatus. Meanwhile, in combination with the design of the coating containing the plurality of strips, it can improve the high-temperature cycle performance, alleviate lithium plating, and improve both the low-temperature intermittent cycle performance and the thermal safety performance of the electrochemical apparatus.

## DETAILED DESCRIPTION

Embodiments of this application will be described in detail below. No embodiment of this application is to be construed as a limitation on this application.

As used in this application, the terms 'comprise,' 'include,' and 'contain' are employed in their open, non-limiting sense.

In addition, a quantity, a ratio, or another numerical value herein is sometimes expressed in the format of a range. Understandably, such a range format is set out for convenience and brevity, and needs to be flexibly understood to include not only the numerical values explicitly specified and defined by the range, but also all individual numerical values or sub-ranges covered in the range as if each individual numerical value and each sub-range were explicitly specified.

In specific implementations and claims, a list of items recited by using the terms such as "one or more of", "one or more thereof", "at least one type of" or other similar terms may mean any combination of the recited items. For example, if items A and B are listed, the phrase "at least one of A or B" mean: A alone; B alone; or both A and B. In another example, if items A, B and C are listed, the phrase "at least one of A, B or C" means A only; B only; C only; A and B (exclude C); A and C (exclude B); B and C (exclude A); or A, B and C in their entirety. The item A may include a single element or a plurality of elements. The item B may include a single element or a plurality of elements. The item C may include a single element or a plurality of elements.

This application provides a separator. The separator includes aluminum atoms and fluorine atoms, and in a 2 $\mu$m $\times$ 2 $\mu$m region of a scanning electron microscope image of the separator, a ratio A of atomic percentages of the aluminum atoms to the fluorine atoms satisfies: $1 \leq A \leq 4$. The separator includes a substrate, a surface of the substrate is provided with a coating, the coating includes a plurality of spaced stripes, and an average spacing between two adjacent stripes is 1 mm to 3 mm. In this application, the average spacing refers to an average spacing obtained by taking a linear distance along a width direction of the separator between center points of two adjacent stripes, referred to as a stripe group, along the width direction of the separator as a spacing, and then calculating a mean value of spacings of five different stripe groups.

In this application, the surface of the separator surface satisfying the above condition range has the appropriate atomic percentages of the aluminum atoms and the fluorine atoms, which is conducive to improving the structural strength of the separator, improving the puncture resistance of the separator at 35°C, and effectively reducing the short-circuit risk of the electrochemical apparatuses. Meanwhile, when the ratio of the atomic percentages of the aluminum atoms to the fluorine atoms satisfies this range, the aluminum atoms and the fluorine atoms can achieve a certain protective effect on the surface of the separator, thereby improving the thermal safety performance of the electrochemical apparatus. Meanwhile, the separator containing the fluorine atoms can effectively improve the affinity between the separator and the electrolyte solution, which is more conducive to improving the liquid retention capability of the electrochemical apparatus during cycling, thereby improving the high-temperature cycle performance of the electrochemical apparatus. When the atomic percentages of the aluminum atoms and the fluorine atoms in the separator are within the above range, the separator maintains overall structural stability and structural strength, which is conducive to reducing the shrinkage degree of the separator at high temperatures. The gas molecules generated by overcharging of the electrochemical apparatus will be evenly distributed in the entire structure of the separator and will not accumulate excessively locally, thereby improving the overcharge protection performance of the electrochemical apparatus and further improving the safety performance of the electrochemical apparatus. In combination with the design of the coating containing the strips, the liquid retention capacity of the electrochemical apparatus can be further effectively improved, thereby further improving the low-temperature intermittent cycle performance and the high-temperature cycle performance of the electrochemical apparatus. When the average spacing between two adjacent stripes falls within the above range, it is conducive to improving the interface bonding force between the separator and the positive/negative electrode plates, thereby being conducive to further improving the low-temperature intermittent cycle performance, the high-temperature cycle performance, and the overcharge protection performance at high temperatures of the electrochemical apparatus. If the ratio A of the atomic percentages of the aluminum atoms to the fluorine atoms is too small, such as less than 1, the atomic percentage of the aluminum atoms is small, which may adversely affect the thermal safety performance and high-temperature cycle performance of the separator. If the ratio A of the atomic percentages of the aluminum atoms to the fluorine atoms is too large, such as greater than 4, the atomic percentage of the aluminum atoms is too high, which will increase the risk of the separator being punctured, and increase the short-circuit risk of the electrochemical apparatus. In some embodiments, for example, A may be 1, 1.1, 1.3, 1.5, 1.7, 1.8, 1.9, 2, 2.1, 2.2, 2.3, 2.4, 2.5, 2.6, 2.7, 2.8, 2.9, 3.0, 3.1, 3.3, 3.5, 3.7, 3.8, 3.9, 4, or a value falling within a range formed by any two thereof.

If the average spacing between two adjacent stripes is too small, such as less than 1 mm, it will increase the number of stripes in the coating, potentially reducing the liquid storage capacity of the coating and adversely affecting the low-temperature intermittent cycle performance of the electrochemical apparatus. If the average spacing between two adjacent stripes is too large, such as greater than 3 mm, it may affect the bonding force between the coating and the electrode plate, thereby affecting the high-temperature cycle performance of the electrochemical apparatus. In some embodiments, the average spacing may be 1 mm, 1.1 mm, 1.2 mm, 1.4 mm, 1.6 mm, 1.8 mm, 2.0 mm, 2.2 mm, 2.4 mm, 2.5 mm, 2.6 mm, 2.8 mm, 3.0 mm, or a value falling within a range formed by any two thereof.

In some embodiments, the ratio of the atomic percentages of the aluminum atoms to the fluorine atoms satisfies: $2 \leq A \leq 3$. It can further improve the puncture resistance of the separator at 35°C, further reduce the short-circuit risk of the electrochemical apparatus, and improve the thermal safety performance of the electrochemical apparatus.

In some embodiments, the average spacing between two adjacent stripes is 1.2 mm to 2.5 mm. The separator satisfying the above condition can further improve the liquid retention capacity of the electrochemical apparatus, and meanwhile, can further increase the transport rate of lithium ions, and improve both the low-temperature intermittent cycle performance and the overcharge protection performance of the electrochemical apparatus. In some embodiments, the average spacing between two adjacent stripes may be 1.2 mm, 1.5 mm, 1.7 mm, 1.8 mm, 1.9 mm, 2.0 mm, 2.2 mm, 2.4 mm, 2.5 mm, or a value falling within a range formed by any two thereof.

In some embodiments, a thickness of the stripes is 0.5 $\mu$m to 2 $\mu$m, which can further improve the low-temperature intermittent cycle performance and the overcharge protection performance of the electrochemical apparatus. In some embodiments, the thickness of the stripes may be 0.5 $\mu$m, 0.7 $\mu$m, 0.8 $\mu$m, 0.9 $\mu$m, 1 $\mu$m, 1.2 $\mu$m, 1.5 $\mu$m, 1.7 $\mu$m, 1.8 $\mu$m, 1.9 $\mu$m, 2 $\mu$m, or a value falling within a range formed by any two thereof.

In some embodiments, based on the mass of the coating, the atomic percentage X % of the aluminum atoms on the separator satisfies: $17 \leq X \leq 28$, and/or, the atomic percentage Y% of the fluorine atoms satisfies: $7 \leq Y \leq 21$. For example, X may be 17, 18, 19, 20, 21, 22, 23, 24, 25, 26, 27, 28, or a value falling within a range formed by any two thereof. Alternatively, Y may be 7, 8, 9, 10, 11, 12, 13, 14, 15, 16, 17, 18, 19, 20, 21, or a value falling within a range formed by any two thereof. By controlling the atomic percentage of the aluminum atoms within the above range, the separator maintains certain structural strength, effectively improves puncture resistance at 35°C, reduces the short-circuit risk of the electrochemical apparatus, and is conducive to improving the structural stability of the electrochemical apparatus. If the atomic percentage of the aluminum atoms is too high, it will affect the transport of the lithium ions in the electrochemical apparatus and affect the high-temperature cycle performance of the electrochemical apparatus. Controlling the atomic percentage of the fluorine atoms within the above range can effectively improve the affinity between the separator and the electrolyte solution, which is more conducive to improving the liquid retention capability of the electrochemical apparatus during high-temperature cycling, thereby further improving the high-temperature cycle performance of the electrochemical apparatus.

In some embodiments, in a 1 mm × 1 mm region, a coverage rate of the coating on the surface of the substrate is 15% to 25%. For example, the coverage rate of the coating on the surface of the substrate may be 15%, 16%, 17%, 18%, 19%, 20%, 21%, 22%, 23%, 24%, 25%, or a value falling within a range formed by any two thereof. When the above range is satisfied, the coating can effectively improve the liquid retention capacity of the electrochemical apparatus, be also conducive to transporting the electrolyte solution, and improve the ionic conductivity of lithium ions, thereby improving the high-temperature cycle performance and low-temperature intermittent cycle performance of the electrochemical apparatus.

In some embodiments, the separator of this application includes a substrate, and at 35°C, a ratio B of puncture strength of the separator to puncture strength of the substrate satisfies: $1.1 \leq B \leq 2.0$. For example, B may be 1.1, 1.2, 1.3, 1.4, 1.5, 1.6, 1.7, 1.8, 1.9, 2.0, or a value falling within a range formed by any two thereof. When the puncture strength of the separator and the puncture strength of the substrate satisfy the above ratio range, it is conducive to maintaining certain structural strength of the separator, improving the overall heat resistance of the separator, and improving the low-temperature intermittent cycle performance of the electrochemical apparatus, the high-temperature cycle performance, and the high-temperature overcharge protection performance of the electrochemical apparatus.

This application further provides an electrochemical apparatus. The electrochemical apparatus includes a positive electrode plate, a negative electrode plate, and the separator, and the separator is disposed between the positive electrode plate and the negative electrode plate.

In some embodiments, the positive electrode plate includes a positive electrode material, and at 40°C, a dry pressing bonding force F between the coating and the positive electrode material satisfies: $2\ N/m \leq F \leq 6.5\ N/m$. When the dry pressing bonding force between the coating and the positive electrode material satisfies the above range, the overall bonding strength between the coating and the positive electrode material is appropriate, which is conducive to transporting the electrolyte solution and improving the interface bonding force of the electrochemical apparatus, thereby being conducive to improving both the energy density and thermal safety performance of the electrochemical apparatus. Additionally, the dry pressing bonding force is within the above range, it is also conducive to alleviating lithium plating phenomenon. When the dry pressing bonding force is large, it is not conducive to transmission of lithium ions. When the dry pressing bonding force is small, it will have an adverse effect on the overall structural stability and energy density of the electrochemical apparatus. Therefore, satisfying the suitable dry pressing bonding force in this application is conducive to improving the low-temperature intermittent cycle performance of the electrochemical apparatus, and also reducing lithium plating at the interface. For example, F may be 2 N/m, 2.5 N/m, 3 N/m, 4 N/m, 5 N/m, 6 N/m, 6.5 N/m, or a value falling within a range formed by any two thereof.

In some embodiments, the positive electrode plate includes a positive electrode material, and a ratio D of $Dv50 / Dn10$ of the positive electrode material satisfies: $20 \leq D \leq 45$, for example, D may be 20, 22, 24, 26, 27, 28, 29, 32, 33, 36, 38, 40, 41, 42, 44, 45, or a value falling within a range formed by any two thereof. When the ratio D of $Dv50 / Dn10$ of the positive electrode material satisfies the above range, it can reduce the possibility of the positive electrode material puncturing the separator, thereby reducing the short-circuit risk of the electrochemical apparatus, improving the thermal safety performance of the electrochemical apparatus, and further improving the low-temperature intermittent cycle performance of the electrochemical apparatus. By controlling the particle size range of the positive electrode material, the specific surface area can be controlled, thereby reducing the occurrence of side reactions and alleviating gas generation at the interface of the electrochemical apparatus. $Dn10$ represents a particle size corresponding to a cumulative number percentage 10% in a number-based particle size distribution curve viewed from a small-diameter side. $Dv50$ represents a particle size corresponding to a cumulative volume percentage 50% in a volume-based particle size distribution curve viewed from a small-diameter side.

In some embodiments, the electrochemical apparatus of this application further includes an electrolyte solution, the electrolyte solution includes a nitrile additive and propylene carbonate (PC), and a ratio E of a mass of the nitrile additive to a mass of the propylene carbonate satisfies: $1 \leq E \leq 5$. The nitrile additives include at least one selected from adiponitrile, succinonitrile, acetonitrile, or ethylene glycol diethyl ether. For example, the ratio E may be 1, 1.5, 2, 2.5, 3, 3.5, 4, 4.5, 5, or a value falling within a range formed by any two thereof. When the electrolyte solution satisfies the range required by this application, it is conducive to reducing the generation of by-products in the electrolyte solution, and can further improve the direct current impedance of the electrochemical apparatus at high and low temperatures, improve the high-temperature cycle performance and low-temperature intermittent cycle performance of the electrochemical apparatus, reduce the amount of gas generated by the electrochemical apparatus at high temperatures, and reduce the overall expansion of the electrochemical apparatus. Furthermore, a ratio E of the mass of the nitrile additive to the mass of the propylene carbonate satisfies: $1 \leq E \leq 3$. When the electrolyte solution satisfies the further preferred range of this application, it can further reduce the amount of gas generated by the electrochemical apparatus at high temperature, reduce the overall expansion of the electrochemical apparatus, and improve the thermal safety performance of the electrochemical apparatus, such as the pass rate of the hot oven test.

In some embodiments, the electrolyte solution further includes triphenylphosphine oxide, and a mass of the triphenylphosphine oxide accounts for x% of a total mass of the electrolyte solution, where $0 \leq x \leq 4.5$. When the electrolyte solution includes the triphenylphosphine oxide and the mass content of the triphenylphosphine oxide is controlled to be within the above range, the triphenylphosphine oxide participates in forming a uniform and dense solid electrolytic interfacial film at a cathode-electrolyte solution interface after 5 cycles of the electrochemical apparatus. A thickness of the solid electrolytic interfacial film is 10 $\mu$m to 150 $\mu$m and the solid electrolytic interfacial film can capture gas molecules such as HF at the interface, thereby reducing the amount of gas generated at the interface of the electrochemical apparatus. Meanwhile, the interphase film can further improve the interface stability of the positive electrode material, thereby being conducive to improving the thermal safety performance of the electrochemical apparatus. In some embodiments, the mass of the triphenylphosphine oxide accounts for x% of the total mass of the electrolyte solution, where x may be 0.2, 0.5, 1, 1.5, 2, 2.5, 3, 3.5, 4, 4.5, or a value falling within a range formed by any two thereof.

In some embodiments, the electrolyte solution further includes biphenyl, and a mass of the biphenyl accounts for y% of the total mass of the electrolyte solution, where $0.4 \leq y \leq 1.8$. When the electrolyte solution includes the biphenyl and the mass ratio of the biphenyl is within the above range, it can suppress the preferential oxidative decomposition of a carbonate electrolyte solution and reduce gas generation at the interface. When the electrolyte solution contains both biphenyl and triphenylphosphine oxide, the biphenyl and the triphenylphosphine oxide jointly participate in the formation of the solid electrolytic interfacial film. A thickness of the resulting solid electrolytic interfacial film is 100 $\mu$m to 400 $\mu$m at the

interface, which can further suppress side reactions at the interface, reduces the amount of gas generated at the interface, and further improve the thermal safety performance of the electrochemical apparatus. In some embodiments, the mass of the biphenyl accounts for y% of the total mass of the electrolyte solution, and y may be 0.4, 0.8, 1, 1.2, 1.5, 1.8, or a value falling within a range formed by any two thereof.

In this application, the ratio A of the atomic percentages of the aluminum atoms to the fluorine atoms on the separator can be changed by adjusting the content of boehmite and polyvinylidene fluoride in the stripe coating on a base film of the separator. The base film in this application refers to the substrate. The average spacing of the separator stripes and the thickness of the strips are changed by adjusting parameters of coating equipment, e.g., changing the coating width or coating thickness of a coating material on the base film.

The following embodiments are intended to give those skilled in the art to a fuller understanding of this application, rather than to limit this application in any way.

The negative electrode plate includes a negative current collector and a negative active material layer disposed on the negative current collector. The negative active material layer may include a negative active material.

In some embodiments, the negative electrode plate includes a negative current collector and a negative active material layer disposed on the negative current collector. The negative active material layer may be disposed on one side or both sides of the negative current collector. In some embodiments, the negative current collector may include at least one of copper foil, nickel foil, or carbon-based current collector. In some embodiments, a thickness of the negative current collector may be 1 $\mu$m to 200 $\mu$m. In some embodiments, the negative active material layer may be coated only on a partial region of the negative current collector. In some embodiments, a thickness of the negative active material layer may be 10 $\mu$m to 500 $\mu$m. It should be understood that these are merely exemplary, and other suitable thicknesses may be employed.

In some embodiments, as described above, the negative active material layer includes a negative active material. In some embodiments, the negative active material includes at least one of natural graphite, artificial graphite, or a silicon-based material. In some embodiments, the silicon-based material includes at least one of silicon, silicon oxide compounds, silicon-carbon compounds, or silicon alloys.

In some embodiments, the negative active material layer may further include a negative electrode conductive agent and/or a negative electrode binder. The negative electrode conductive agent may include at least one of carbon black, acetylene black, Ketjen black, graphene, carbon nanotubes, or carbon fibers. In some embodiments, the negative electrode binder may include at least one of carboxymethylcellulose (CMC), polyacrylic acid, polyacrylate salt, polyacrylate, polyvinyl pyrrolidone, polyimide, polysiloxane, or styrene-butadiene rubber. It should be understood that the above-disclosed materials are merely exemplary, and the negative active material layer may employ any other suitable materials. In some embodiments, a mass ratio between the negative active material, the negative electrode conductive agent, and the negative electrode binder in the negative active material layer may be (80-99): (0.5-10): (0.5-10). It should be understood that this is merely exemplary and not intended to limit this application.

In some embodiments, the positive electrode plate includes a positive current collector and a positive active material layer disposed on the positive current collector. The positive active material layer may include a positive active material, that is, positive electrode material, and may be located on one side or both sides of the positive current collector. In some embodiments, the positive current collector may be aluminum foil. Definitely, other commonly used positive current collectors in the art may also be employed. In some embodiments, a thickness of the positive current collector may be 1 $\mu$m to 200 $\mu$m. In some embodiments, the positive active material layer may be coated only on a partial region of the positive current collector. In some embodiments, a thickness of the positive active material layer may be 10 $\mu$m to 500 $\mu$m. It should be understood that these are merely exemplary, and other suitable thicknesses may be employed.

In some embodiments, as described above, the positive active material layer includes a positive active material. In some embodiments, the positive active material may include at least one of lithium cobalt oxide, lithium manganese oxide, lithium iron phosphate, lithium manganese iron phosphate, lithium nickel cobalt manganese oxide, lithium nickel cobalt aluminum oxide, or lithium nickel manganese oxide, and the above positive active materials may be doped and/or coated.

In some embodiments, the positive electrode material surface may include trilithium phosphate and/or lithium niobate with a mass ratio of 1:4 to 1:2, and a thickness of the coating layer is 3 $\mu$m to 4 $\mu$m.

In some embodiments, the positive active material layer further includes a positive electrode binder and a positive electrode conductive agent. In some embodiments, the positive electrode binder may include at least one of polyvinylidene fluoride, vinylidene fluoride hexafluoropropylene copolymer, styrene-acrylate copolymer, styrene-butadiene copolymer, polyamide, polyacrylonitrile, polyacrylate, polyacrylic acid, polyacrylate salt, sodium carboxymethyl cellulose, polyvinyl acetate, polyvinylpyrrolidone, polyvinyl ether, polytetrafluoroethylene, or polyhexafluoropropylene. In some embodiments, the positive electrode conductive agent may include at least one of conductive carbon black, acetylene black, Ketjen black, graphene, carbon nanotubes, or carbon fibers.

In this application, the electrochemical apparatus includes an electrolyte solution including a lithium salt and a non-aqueous solvent. This application does not particularly limit the lithium salt, as long as the purpose of this application can be achieved. For example, the lithium salt may include, but is not limited to, at least one of $LiPF_6$, $LiBF_4$, $LiClO_4$,

LiB(C6H5)$_4$, LiCH$_3$SO$_3$, LiCF$_3$SO$_3$, LiN(SO$_2$CF3)$_2$, LiC(SO$_2$CF$_3$)$_3$, Li$_2$SiF$_6$, lithium bis(oxalate)borate (LiBOB), or lithium difluoroborate. The content of the lithium salt in the electrolyte solution is not particularly limited in this application, as long as the purpose of this application can be achieved. For example, based on the mass of the electrolyte solution, a mass percentage of the lithium salt is 5% to 23%. For example, the concentration of the lithium salt in the electrolyte solution may be 5%, 8%, 12%, 16%, 20%, 23%, or a value falling within a range formed by any two thereof. The non-aqueous solvent is not particularly limited in this application, as long as the purpose of this application can be achieved. For example, the non-aqueous solvent may include, but is not limited to, at least one of a carbonate compound, a carboxylate compound, an ether compound, or other organic solvents. The carbonate compound may include, but is not limited to, at least one of a chain carbonate compound, a cyclic carbonate compound, or a fluorocarbonate compound. The chain carbonate compound may include, but is not limited to, at least one of dimethyl carbonate (DMC), diethyl carbonate (DEC), dipropyl carbonate (DPC), methyl propyl carbonate (MPC), ethylene propyl carbonate (EPC), or ethyl methyl carbonate (EMC). The cyclic carbonate compound may include, but is not limited to, at least one of ethylene carbonate (EC), butylene carbonate (BC), or vinyl ethylene carbonate (VEC).

The fluorocarbonate compound may include, but is not limited to, at least one of 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, γ-butyrolactone, decalactone, valerolactone, or caprolactone. The ether compound may include, but is not limited to, at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. The content of the non-aqueous solvent in the electrolyte solution is not particularly limited in this application, as long as the purpose of this application can be achieved. Content of non-aqueous solvent = 100% - content of lithium salt.

In some embodiments, the substrate includes at least one of polyethylene, polypropylene, polyvinylidene fluoride, polyethylene terephthalate, polyimide, or aramid. For example, the polyethylene includes at least one selected from high density polyethylene, low density polyethylene or ultra-high molecular weight polyethylene. Particularly, the polyethylene and the polypropylene have a good effect for preventing short circuits and can improve the safety of a battery through a shutdown effect. In some embodiments, the thickness of the substrate ranges from about 3 μm to 200 μm.

In some embodiments, the separator is provided with a porous layer. A binder of the porous layer is at least one selected from polyvinylidene fluoride, vinylidene fluoride hexafluoropropylene copolymer, polyamide, polyacrylonitrile, polyacrylate, polyacrylic acid, polyacrylate salt, sodium carboxymethyl cellulose, polyvinylpyrrolidone, polyvinyl ether, polytetrafluoroethylene, or polyhexafluoropropylene. The porous layer on the surface of the separator can improve the heat resistance, oxidation resistance and electrolyte solution infiltration performance of the separator and enhance the bonding force between the separator and the electrode plate. The separator may further include a high-melting-point crystalline polymer or a high-temperature-resistant amorphous polymer, and high-temperature-resistant resin includes at least one of polypropylene, poly(4-methyl-1-pentene), polytetrafluoroethylene, polyvinylidene fluoride, or a cycloolefin copolymer. The high-melting-point crystalline polymer includes at least one of polypropylene, poly(4-methyl-1-pentene), polytetrafluoroethylene, or polyvinylidene fluoride, and the high-temperature-resistant amorphous polymer includes a cycloolefin copolymer. Based on the mass of the polyolefin porous substrate, a mass percentage z of the high-temperature-resistant resin is 2% to 10%. For example, the mass percentage z of the high-temperature-resistant resin may be 2%, 3%, 5%, 7%, 8%, 10%, or a value falling within a range formed by any two thereof. When the above types of high-temperature-resistant resins are added to the polyolefin porous substrate and the mass percentage of the high-temperature-resistant resins is controlled within the above range, it is conducive to increasing the melting rupture temperature of the separator, and improving the strength and the high-temperature performance of the electrochemical apparatus.

In some embodiments, the electrochemical apparatus is a lithium-ion battery, but this application is not limited thereto.

In some embodiments of this application, taking a lithium-ion battery as an example, the positive electrode plate, the separator, and the negative electrode plate are wound or stacked in sequence to form an electrode assembly, which is then placed into a housing such as an aluminum laminated film for encapsulation. After injecting the electrolyte solution, chemical formation, and final encapsulation, the lithium-ion battery is manufactured.

Embodiments of this application further provide an electronic device including the above electrochemical apparatus. The electrochemical apparatus supplies power to a load of the electronic device. The above electrochemical apparatus includes a separator. The electrochemical apparatus containing the separator exhibits excellent high-temperature cycle performance, low-temperature intermittent cycle performance, and thermal safety performance, thereby prolonging the service life of the electronic device under high/low-temperature conditions and improving operational safety. The electronic device in the embodiments of this application is not particularly limited and may be any electronic device known in the prior art. In some embodiments, the electronic device may include, but not limited to, a notebook computer, pen-input computer, mobile computer, electronic book player, portable phone, portable fax machine, portable copier, portable printer, stereo headset, video recorder, liquid crystal television, hand-held cleaner, portable CD machine, mini disc, transceiver, electronic organizer, calculator, memory card, portable audio recorder, radio, backup power supply, motor, automobile, motorcycle, power bicycle, bicycle, lighting appliance, toy, game machine, clock electric tool, flash light, camera, large household storage battery, lithium-ion capacitor, and the like.

Some specific embodiments and comparative embodiments are listed below to better illustrate this application, where lithium-ion batteries are used as an example.

Preparing a lithium-ion battery

<Comparative Embodiment 1-1>

Separator:

Preparing an inorganic coating:

Using a polyethylene (PE) microporous film with a thickness of 8 $\mu$m as a PE base film.

Mixing boehmite inorganic particles with Dv50 of 1.5 $\mu$m with polyacrylate and polyvinylidene fluoride at a mass ratio of 65:20:15, dissolving the mixture in deionized water to form an inorganic coating slurry with a solid content of 35%, uniformly applying the resulting inorganic coating slurry to both surfaces of the PE base film by micro-gravure coating to form heat-resistant layers, and drying in an oven, where a thickness of the obtained inorganic coating is 1.5 $\mu$m.

Preparing an organic coating:

Adding the first polymer, polypropylene (PP), which is a propylene-based monomer polymer particle to a mixer and stirring uniformly; adding sodium carboxymethyl cellulose to the mixer and stirring uniformly, adding a wetting agent, dimethylsiloxane, to the mixer, and then adding same into deionized water for stirring, adjusting the viscosity of the slurry to be 30 mPa•s, and a solid content to be 7%, and obtaining an organic coating slurry. Uniformly applying the organic coating slurry to the inorganic coatings on both surfaces of the base film, and after drying in an oven, obtaining a first coating. The thickness of the first coating layer is 0.6 $\mu$m. Then, adding a certain amount of polyvinylidene fluoride (PVDF) to the first coating layer, such that the mass ratio between the first polymer, sodium carboxymethyl cellulose, dimethylsiloxane, and polyvinylidene fluoride is 80:3.5:4.5:12. Performing drying, then obtaining a striped coating. The polymer in the separator is spherical or spheroidal, and the sphericity R of the polymer satisfies $0.8 \le R \le 1.0$. The striped coating is prepared by gravure coating with a spacing of 1 $\mu$m and a thickness of 0.8 $\mu$m.

The remaining preparation methods and material selections of Comparative Embodiment 1-1 are the same as those in Embodiment 1-1.

<Embodiment 1-1>

Positive electrode: Mixing lithium iron phosphate (Dv50 of 6 $\mu$m, Dv10 of 0.3 $\mu$m), acetylene black, and polyvinylidene fluoride in a weight ratio of 86: 7: 7 and adding same to N-methyl-pyrrolidone. Stirring the mixture to form a homogeneous positive electrode slurry. Uniformly applying the positive electrode slurry to one surface of a 13 $\mu$m-thick aluminum foil as the positive current collector, and drying at 85°C to obtain the positive electrode plate coated with the positive active material layer on one surface. Repeating the above steps on the opposite surface of the aluminum foil as the positive current collector to produce the positive electrode plate coated with positive active material layers on both surfaces. After cold pressing, cutting, and slitting, drying the electrode plate under a vacuum condition of 85°C for 4 hours, rolling and performing tab welding to obtain the positive electrode plate with a specification of 74 mm $\times$ 867 mm.

Negative electrode: Mixing artificial graphite as the negative active material, conductive carbon black as the conductive agent, styrene-butadiene rubber (SBR) as the binder, and sodium carboxymethyl cellulose (CMC) as the thickener in a weight ratio of 97: 1: 1: 1, adding deionized water, and uniformly stirring under a vacuum mixer to obtain the negative electrode slurry with a solid content of 78 wt%. Uniformly applying the negative electrode slurry to one surface of copper foil as the negative current collector, and drying at 115°C to obtain the negative electrode plate coated with a 85 $\mu$m-thick negative active material layer on one surface. Repeating the above steps on the other surface of the copper foil as the negative current collector to obtain the negative electrode plate coated with negative active material layers on both surfaces. Performing cold pressing, cutting, and slitting to obtain the negative electrode plate with a specification of 476 mm $\times$ 93.5 mm.

Electrolyte solution: In an argon-filled glove box, first adding succinonitrile accounting for 3.5% of the total mass of the electrolyte solution and chain carbonate accounting for 85%, where a mass ratio of EP: EMC: DEC: PP is 15: 20:20:45. In addition, weighing propylene carbonate (PC) accounting for 3.5% of the total mass of the electrolyte solution, triphenylphosphine oxide accounting for 3% of the total mass of the electrolyte solution, and biphenyl accounting for 1.5% of the total mass of the electrolyte solution, and the rest being lithium hexafluorophosphate as a lithium salt.

Separator:

Using a polyethylene (PE) microporous film with a thickness of 8 $\mu$m as a PE base film.

Preparing an inorganic coating:

Mixing boehmite inorganic particles with Dv50 of 1.5 $\mu$m with polyacrylate and polyvinylidene fluoride at a mass ratio of 85:10:5, dissolving the mixture in deionized water to form an inorganic coating slurry with a solid content of 41%, uniformly applying the resulting inorganic coating slurry to both surfaces of the PE base film using micro-gravure coating to form heat-resistant layers, and drying in an oven, where the obtained inorganic coating has a thickness of 1.5 $\mu$m.

Preparing an organic coating:

Adding the first polymer, polypropylene (PP), which is a propylene-based monomer polymer particle to a mixer and stirring uniformly; adding sodium carboxymethyl cellulose to the mixer and stirring uniformly, adding a wetting agent, dimethylsiloxane, to the mixer, and then adding same into deionized water for stirring, adjusting the viscosity of the slurry to be 30 mPa•s, and a solid content to be 7%, and obtaining an organic coating slurry. Uniformly applying the organic coating slurry to the inorganic coatings on both surfaces of the base film, and after drying in an oven, obtaining a first coating. The thickness of the first coating layer is 0.6 $\mu$m. Then, adding a certain amount of polyvinylidene fluoride (PVDF) to the first coating layer, such that the mass ratio between the first polymer, sodium carboxymethyl cellulose, dimethylsiloxane, and polyvinylidene fluoride is 90:1.5:4.5:4. Performing drying, then obtaining a striped coating. The polymer in the separator is spherical or spheroidal, and the sphericity R of the polymer satisfies $0.8 \leq R \leq 1.0$. The striped coating is prepared by gravure coating with a spacing of 1 $\mu$m and a thickness of 0.8 $\mu$m.

Preparing a lithium-ion battery: Stacking a positive electrode plate, a separator, and a negative electrode plate in order, such that the separator is located between the positive electrode plate and the negative electrode plate for separation. Then, winding to obtain an electrode assembly. Placing the electrode assembly in an aluminum-laminated film as an outer package after tabs are welded, removing water at 80°C, and injecting the foregoing prepared electrolyte solution. Performing processes such as vacuum encapsulation, resting, chemical formation, shaping, and capacity testing, to obtain a lithium-ion battery.

Lithium-ion battery performance test:

(1) Capacity retention rate at the 90th intermittent cycle test (-15°C):

At -15°C, letting the lithium-ion battery stand for 30 minutes; charging at a constant current of 0.5C rate until reaching 3.8 V, charging at a constant voltage of 3.8 V until the current reaches 0.05 C; letting the battery stand in a 45°C environment for 20 hours; discharging at a constant current of 0.5 C rate until reaching 3.0 V and recording the discharge capacity of the battery. This constitutes one complete intermittent charge-discharge cycle. Repeating this process on the battery for 90 cycles.

Capacity retention rate (%) of the lithium-ion battery after 90 cycles = (Discharge capacity of the 90th cycle / Discharge capacity of the first cycle) x 100%

(2) Pass rate for 138°C hot oven test:

For lithium-ion batteries in each embodiment and comparative embodiment: charging at a constant current of 0.5 C rate at room temperature until reaching the full charge voltage of 3.8 V, then continuing charging at a constant voltage of 3.8 V until the cutoff current reaches 0.05 C to achieve a full charge state. Inspecting appearance to confirm the lithium-ion battery is in normal operable condition. Placing fully charged batteries into an oven. Heating at a rate of 5°C/min until reaching the specified hot oven test temperature of 138°C. Maintaining this temperature for one hour while observing the battery state throughout the process.

Evaluation criteria: The battery does not catch fire or explode.

$$\text{Pass rate of hot oven test} = \text{Pass number of hot oven test} / \text{Total number}$$

(3) Battery cycle test at 55°C for 600 cycles:

Repeating the charging and discharging steps for the lithium-ion batteries in each embodiment and comparative embodiment, and calculating the discharge capacity retention rate of the lithium-ion batteries.
In an environment at 55°C, performing the first charge and discharge cycle, charging at a constant charging current of 2 C until reaching the full charge voltage of 3.8 V, where 4.5 V applies when the positive electrode material is a ternary material; for lithium iron phosphate as the positive electrode material, the charge cutoff voltage is 3.8 V, while for lithium cobalt oxide as the positive electrode material, the charge cutoff voltage is 4.2 V; then charging at a constant voltage at the maximum voltage until the current reaches 0.02 C, then discharging at a constant discharging current of 0.5 C until the terminal voltage reaches 3.0 V, and recording the discharge capacity of the first cycle. Repeating the above steps for 600 charge/discharge cycles and recording the discharge capacity of the 600th cycle.

Cycle capacity retention rate = (Discharge capacity of the 600th cycle / Discharge capacity of the first cycle) × 100%.

(4) 4 C and 4.5 V overcharge test at 75°C:

For each embodiment and comparative embodiment, discharging 10 parallel lithium-ion battery samples to 2.8 V at 0.5 C under 25°C, then charging at a constant current of 4 C to 4.5 V at 75°C, charging at a constant voltage for 3 hours, and monitoring surface temperature changes of cells, where pass criteria is no fire, no combustion, and no explosion of the cells.

(5) Battery gas generation volume test at 55°C:

Performing constant current charging at a current rate of 0.2 C until reaching 3.8 V at 55°C, and then performing constant voltage charging at 3.8 V for 1 hour. Then, storing the charged battery in a constant-temperature thermostat at 55°C. After 200 hours, removing the battery from the constant-temperature thermostat, allowing it to return to room temperature, and measuring the gas generation volume of each battery to evaluate the 3.8 V storage characteristics of the battery. Determining the gas generation volume by the following Archimedes method: Immersing the test battery in a container filled with ultrapure water, and measuring the volume of the single-layer laminated battery based on the weight change before and after immersion. As an apparatus for measuring the volume by weight change, using a densitometer MDS-300 manufactured by AlphaMirage Corp.

Separator performance test:

(1) Atomic percentage test of aluminum atoms and fluorine atoms:

Preparing a separator sample, testing by using a device combined with a scanning electron microscope (SEM) and an energy dispersive spectrometer (EDS). Selecting five 2 μm × 2 μm regions for EDS analysis. After obtaining the atomic percentages of aluminum atoms and fluorine atoms, calculating the average values of aluminum atoms and fluorine atoms to determine a ratio A of the atomic percentages of the aluminum atoms to the fluorine atoms.

(2) Test of an average spacing between stripes:

Measuring the average spacing between stripes under an electron microscope or scanning electron microscope. The specific method refers to taking a linear distance along a width direction of the separator between center points of two adjacent stripes, referred to as a stripe group, as a spacing along the width direction of the separator, and then calculating a mean value of spacings of five different stripe groups to obtain the average spacing.

(3) Test of a coverage rate of a coating on the surface of a substrate:

Under an electron microscope or scanning electron microscope, selecting a 10 μm × 10 μm region to calculate

the ratio of the area of the strip-shaped coating to the area of the whole region (10 $\mu$m $\times$ 10 $\mu$m). Optionally selecting three parallel samples, and taking the average value as the coverage rate.

(4) Test of dry pressing bonding force between a coating and a positive electrode plate:

Testing the dry pressing bonding force between the separator and the positive electrode plate according to the 180° peel strength standard. Cutting the separator and the positive electrode plate into 54.2 mm $\times$ 72.5 mm samples, laminating the separator and the positive electrode plate together, performing hot pressing by using a hot press machine under conditions of 40°C temperature and 1 MPa pressure for 100 seconds, cutting the composite sample into 15 mm $\times$ 54.2 mm strips, and testing the bonding force according to the 180° peel test standard. Respectively measuring the bonding force between the coating and the positive electrode plate.

(5) Particle sizes Dn10 and Dv50 of a positive active material

Dn10 represents a particle size corresponding to a cumulative number percentage 10% in a number-based particle size distribution curve viewed from a small-diameter side. Dv50 represents a particle size corresponding to a cumulative volume percentage 50% in a volume-based particle size distribution curve viewed from a small-diameter side. The commonly used instrument for detection may be a laser particle size analyzer.

(6) Puncture strength test of a separator, and puncture strength test of a substrate:

At 35 °C, fixing the separator flatly on a test fixture, and placing the fixture vertically below a moving bracket of a GoTech tensile test machine; and secondly, piercing the separator with a spherical steel needle with a diameter of 1.0 mm at a speed of 300$\pm$10 mm/min, and measuring the force required for the steel needle to pierce the separator, which is the puncture strength. Washing off the coating on the separator, then fixing the separator which is only the base film flatly on the test fixture, and placing the fixture vertically below the moving bracket of the GoTech tensile test machine; and secondly, piercing the separator with the spherical steel needle with a diameter of 1.0 mm at a speed of 300$\pm$10 mm/min, and measuring the force required for the steel needle to pierce the base film, which is the puncture strength.

Embodiment 1-2 to Embodiment 1-18

By adjusting both the mass ratio between the boehmite inorganic particles, the polyacrylate, and the polyvinylidene fluoride and the solid content of the boehmite inorganic particles, the polyacrylate, and the polyvinylidene fluoride in Embodiment 1-1, as well as adjusting the mass ratio between the first polymer, sodium carboxymethyl cellulose, dimethylsiloxane, and polyvinylidene fluoride in the organic coating, the corresponding content of aluminum atoms and fluorine atoms can be adjusted. The average spacing between adjacent stripes, the thickness of the stripes, and the coverage rate can all be adjusted by the gravure coating method to obtain the relevant parameters listed in Table 1, while the remaining conditions are the same as in Embodiment 1-1.

Comparative Embodiment 1-2 to Embodiment 1-4

By adjusting both the mass ratio between the boehmite inorganic particles, the polyacrylate, and the polyvinylidene fluoride and the solid content of the boehmite inorganic particles, the polyacrylate, and the polyvinylidene fluoride, as well as adjusting the mass ratio between the first polymer, sodium carboxymethyl cellulose, and dimethylsiloxane in the organic coating, the corresponding content of aluminum atoms and fluorine atoms can be adjusted to obtain the relevant parameters listed in Table 1, while the remaining conditions are the same as in Embodiment 1-1.

Embodiment 2-1 to Embodiment 2-22

The Dv50 and Dn10 of the positive electrode material can be obtained by methods such as ball milling and stirring. Identical to Embodiment 1-1 except that the relevant preparation parameters are adjusted according to Table 2.

Embodiment 2-23 to Embodiment 2-26

Identical to Embodiment 1-1 except that the relevant preparation parameters are adjusted according to Table 3.

Table 1

| | Ratio A of aluminum atoms to fluorine atoms | Atomic percentage of aluminum atoms (%) | Atomic percentage of fluorine atoms (%) | Average spacing between stripes on striped coating /mm | Thickness of stripes on striped coating /μm | Coverage rate of stripe coating in a 1 μm × 1 μm region /% | Puncture strength of separator at 35°C/N | Ratio of puncture strength of separator at 35°C to puncture strength of substrate | Capacity retention rate after 600 cycles at 55°C /% | Pass number of 4C and 4.5V overcharge test at 75°C |
|---|---|---|---|---|---|---|---|---|---|---|
| Embodiment 1-1 | 1 | 21 | 21.00 | 1 | 0.8 | 15% | 3.04 | 1.1 | 77.20% | 8/10 |
| Embodiment 1-2 | 1.6 | 17 | 10.63 | 1 | 0.8 | 15% | 3.12 | 1.3 | 78.50% | 9/10 |
| Embodiment 1-3 | 2 | 20 | 10.00 | 1 | 0.8 | 15% | 3.18 | 1.5 | 80.20% | 10/10 |
| Embodiment 1-4 | 2.5 | 22 | 880 | 1 | 0.8 | 15% | 3.24 | 1.9 | 81.10% | 10/10 |
| Embodiment 1-5 | 3 | 23 | 7.67 | 1 | 0.8 | 15% | 3.30 | 2 | 82.30% | 10/10 |
| Embodiment 1-6 | 3.3 | 25 | 7.58 | 1 | 0.8 | 15% | 3.38 | 1.9 | 80.60% | 9/10 |
| Embodiment 1-7 | 4 | 28 | 7.00 | 1 | 0.8 | 15% | 3.53 | 2.1 | 80.10% | 8/10 |
| Embodiment 1-8 | 1.2 | 24 | 2000 | 1.1 | 0.8 | 21% | 3.15 | 1.6 | 78.20% | 8/10 |
| Embodiment 1-9 | 1.3 | 22 | 16.92 | 1.2 | 0.8 | 20% | 3.17 | 1.5 | 79.10% | 9/10 |
| Embodiment 1-10 | 1.4 | 24 | 17.14 | 2.2 | 0.8 | 18% | 3.11 | 1.4 | 80.20% | 9/10 |
| Embodiment 1-11 | 1.1 | 21 | 19.09 | 2.5 | 0.8 | 16% | 3.08 | 1.1 | 80.50% | 9/10 |
| Embodiment 1-12 | 1.5 | 18 | 12.00 | 3 | 0.8 | 23% | 3.25 | 1.5 | 80.90% | 8/10 |
| Embodiment 1-13 | 1.8 | 24 | 13.33 | 1 | 0.5 | 13% | 3.01 | 1.8 | 78.30% | 8/10 |

| | Ratio A of aluminum atoms to fluorine atoms | Atomic percentage of aluminum atoms (%) | Atomic percentage of fluorine atoms (%) | Average spacing between stripes on striped coating /mm | Thickness of stripes on striped coating /μm | Coverage rate of stripe coating in a 1 μm × 1 μm region /% | Puncture strength of separator at 35 °C / N | Ratio of puncture strength of separator at 35 °C to puncture strength of substrate | Capacity retention rate after 600 cycles at 55°C /% | Pass number of 4C and 4.5V overcharge test at 75°C |
|---|---|---|---|---|---|---|---|---|---|---|
| Embodiment 1-14 | 1.9 | 21 | 11.05 | 1 | 1.2 | 16% | 3.25 | 1.9 | 79.20% | 8/10 |
| Embodiment 1-15 | 2.2 | 27 | 12.27 | 1 | 1.6 | 18% | 3.31 | 2 | 79.70% | 9/10 |
| Embodiment 1-16 | 1.5 | 24 | 16.00 | 1 | 2 | 20% | 3.35 | 1.8 | 80.10% | 9/10 |
| Embodiment 1-17 | 1.4 | 19 | 13.57 | 1 | 2.5 | 22% | 3.41 | 1.7 | 77.40% | 7/10 |
| Embodiment 1-18 | 1.6 | 25 | 15.63 | 1 | 0.3 | 11% | 2.68 | 1.6 | 76.20% | 7/10 |
| Comparative Embodiment 1-1 | 0.5 | 13 | 26.00 | 1 | 0.8 | 15% | 2.88 | 0.5 | 70.40% | 5/10 |
| Comparative Embodiment 1-2 | 5 | 35 | 7.00 | 1 | 0.8 | 12% | 3.63 | 3.6 | 72.20% | 7/10 |
| Comparative Embodiments 1~3 | 1.7 | 17 | 10.00 | 4 | 0.8 | 26% | 3.43 | 2.3 | 71.10% | 7/10 |
| Comparative Embodiment 1-4 | 1.5 | 20 | 13.33 | 0.5 | 0.8 | 12% | 2.98 | 1.3 | 70.30% | 6/10 |

In Table 1 above, compared to Comparative Embodiments 1-1 and 1-2, in Embodiments 1-1 to 1-7, when the ratio of the atomic percentages of aluminum atoms to fluorine atoms falls within an appropriate range, the overall structural strength of the separator is improved, the affinity between the separator and the electrolyte solution is improved, and the thermal shrinkage of the separator at high temperatures is reduced. Consequently, the thermal safety performance, high-temperature cycle performance, and overcharge protection performance of the lithium-ion battery are improved. Specifically, when the ratio of the atomic percentages of aluminum atoms to fluorine atoms ranges from 2 to 3, the thermal safety performance, high-temperature cycle performance, and overcharge protection performance of the lithium-ion battery are further improved.

Compared with Comparative Embodiments 1-3 and 1-4, in Embodiments 1-1 and 1-8 to 1-12, when the average spacing between the stripes in the coating and the coverage rate of the coating are within an appropriate range, the thermal safety performance, high-temperature cycle performance, and overcharge protection performance of the lithium-ion battery can be improved.

Specifically, in combination with Embodiments 1-13 to 1-18, when the thickness of the strips in the coating falls within an appropriate range, the thermal safety performance, high-temperature cycle performance, and overcharge protection performance of the lithium-ion battery can also be improved.

Specifically, when the atomic percentage of aluminum atoms is within an appropriate range, it is also conducive to improving the high-temperature cycle performance and overcharge protection performance of the lithium-ion battery. When the atomic percentage of fluorine atoms is within an appropriate range, it is also conducive to improving the thermal safety performance, high-temperature cycle performance, and overcharge protection performance of the lithium-ion battery.

Table 2

| | Dv50 / Dn10 of positive electrode material | Mass percentage content of nitrile additive (succinonitrile) in the total electrolyte solution relative to the total electrolyte solution /% | Mass percentage content of PC in the total electrolyte solution /% | Ratio E of mass percentage contents of organic nitrile additive to PC in the total electrolyte solution | Mass percentage content x% of triphenylphosphine oxide in the total electrolyte solution | Mass percentage content y% of biphenyl in the total electrolyte solution | Dry pressing bonding force F between striped coating and cathode material at 40°C | Pass number of hot oven test at 138°C | Gas generation volume at 55°C /ml | Capacity retention rate at the 90th intermittent cycle test (-15°C) /% |
|---|---|---|---|---|---|---|---|---|---|---|
| Embodiment 1-1 | 20 | 3.50% | 3.50% | 1 | 3.00% | 1.50% | 6.5 | 9/10 | 0.32 | 75.00% |
| Embodiment 2-1 | 25 | 3.50% | 3.50% | 1 | 3.00% | 1.50% | 5.5 | 9/10 | 0.31 | 76.20% |
| Embodiment 2-2 | 32 | 3.50% | 3.50% | 1 | 3.00% | 1.50% | 4.7 | 8/10 | 0.28 | 76.40% |
| Embodiment 2-3 | 37 | 3.50% | 3.50% | 1 | 3.00% | 1.50% | 3.3 | 8/10 | 0.26 | 77.10% |
| Embodiment 2-4 | 40 | 3.50% | 3.50% | 1 | 3.00% | 1.50% | 2.8 | 7/10 | 0.24 | 77.50% |
| Embodiment 2-5 | 45 | 3.50% | 3.50% | 1 | 3.00% | 1.50% | 2.0 | 7/10 | 0.23 | 77.80% |
| Embodiment 2-6 | 50 | 3.50% | 3.50% | 1 | 3.00% | 1.50% | 1.2 | 5/10 | 0.29 | 73.10% |
| Embodiment 2-7 | 16 | 3.50% | 3.50% | 1 | 3.00% | 1.50% | 7.5 | 9/10 | 0.37 | 72.80% |
| Embodiment 2-8 | 20 | 5.00% | 2.50% | 2 | 3.00% | 1.50% | 6.3 | 9/10 | 0.30 | 75.80% |
| Embodiment 2-9 | 20 | 5.00% | 1.67% | 3 | 3.00% | 1.50% | 6.7 | 9/10 | 0.29 | 76.50% |
| Embodiment 2-10 | 20 | 5.00% | 1.25% | 4 | 3.00% | 1.50% | 6.6 | 9/10 | 0.41 | 74.90% |

EP 4 704 204 A1

16

(continued)

| | Dv50 / Dn10 of positive electrode material | Mass percentage content of nitrile additive (succinonitrile) in the total electrolyte solution relative to the total electrolyte solution /% | Mass percentage content of PC in the total electrolyte solution /% | Ratio E of mass percentage contents of organic nitrile additive to PC in the total electrolyte solution | Mass percentage content x% of triphenylphosphine oxide in the total electrolyte solution | Mass percentage content y% of biphenyl in the total electrolyte solution | Dry pressing bonding force F between striped coating and cathode material at 40°C | Pass number of hot oven test at 138°C | Gas generation volume at 55°C /ml | Capacity retention rate at the 90th intermittent cycle test (-15°C) /% |
|---|---|---|---|---|---|---|---|---|---|---|
| Embodiments 2-11 | 20 | 5.00% | 1.00% | 5 | 3.00% | 1.50% | 6.3 | 9/10 | 0.44 | 74.20% |
| Embodiment 2-12 | 20 | 5.00% | 0.83% | 6 | 3.00% | 1.50% | 6.4 | 7/10 | 0.27 | 73.10% |
| Embodiment 2-13 | 20 | 5.00% | 2.50% | 2 | 1.00% | 1.50% | 6.2 | 8/10 | 0.33 | 76.50% |
| Embodiment 2-14 | 20 | 5.00% | 2.50% | 2 | 2.00% | 1.50% | 6.1 | 8/10 | 0.32 | 77.40% |
| Embodiment 2-15 | 20 | 5.00% | 2.50% | 2 | 4.50% | 1.50% | 6.3 | 10/10 | 0.23 | 76.50% |
| Embodiment 2-16 | 20 | 5.00% | 2.50% | 2 | 5.00% | 1.50% | 6.2 | 7/10 | 0.28 | 76.80% |
| Embodiment 2-17 | 20 | 5.00% | 2.50% | 2 | 0% | 1.50% | 5.8 | 6/10 | 0.48 | 72.10% |
| Embodiment 2-18 | 20 | 5.00% | 2.50% | 2 | 3.00% | 0.00% | 5.9 | 6/10 | 0.51 | 71.30% |
| Embodiment 2-19 | 20 | 5.00% | 2.50% | 2 | 3.00% | 0.40% | 6.3 | 8/10 | 0.30 | 77.50% |
| Embodiment 2-20 | 20 | 5.00% | 2.50% | 2 | 3.00% | 1.00% | 6.2 | 9/10 | 0.29 | 78.00% |
| Embodiment 2-21 | 20 | 5.00% | 2.50% | 2 | 3.00% | 1.80% | 6.5 | 9/10 | 0.18 | 78.70% |

(continued)

| | Dv50 / Dn10 of positive electrode material | Mass percentage content of nitrile additive (succinonitrile) in the total electrolyte solution relative to the total electrolyte solution /% | Mass percentage content of PC in the total electrolyte solution /% | Ratio E of mass percentage contents of organic nitrile additive to PC in the total electrolyte solution | Mass percentage content x% of triphenylphosphine oxide in the total electrolyte solution | Mass percentage content y% of biphenyl in the total electrolyte solution | Dry pressing bonding force F between striped coating and cathode material at 40°C | Pass number of hot oven test at 138°C | Gas generation volume at 55°C /ml | Capacity retention rate at the 90th intermittent cycle test (-15°C) /% |
|---|---|---|---|---|---|---|---|---|---|---|
| Embodiment 2-22 | 20 | 5.00% | 2.50% | 2 | 3.00% | 2.00% | 6.6 | 7/10 | 0.25 | 76.30% |

In Table 2 above, in Embodiments 1-1 and 2-1 to 2-7, when the ratio D of the particle sizes Dv50 / Dn10 of the positive electrode material is within an appropriate range, it is conducive to improving the pass rate of hot oven test and low-temperature intermittent cycle performance of the lithium-ion battery, and achieving good thermal safety performance.

Specifically, in Embodiments 1-1 and 2-8 to 2-12, when the mass ratio of succinonitrile to propylene carbonate in the electrolyte solution meets a certain range, the amount of gas generated in the lithium-ion battery at high temperatures is further reduced, and the low-temperature intermittent cycle performance and the pass rate of hot oven test of the lithium-ion battery are improved.

In Embodiments 2-13 to 2-22, the mass percentages of triphenylphosphine oxide and biphenyl in the electrolyte solution are adjusted. When the mass percentages of triphenylphosphine oxide and biphenyl are within the appropriate ranges, the amount of gas generated in the lithium-ion battery is reduced, and the lithium-ion battery has good low-temperature intermittent cycle performance and pass rate of hot oven test.

Table 3

| | Dv50 / Dn10 of positive electrode material | Composition of nitrile additive in the total electrolyte solution and mass percentage content of nitrile additive in the total electrolyte solution /% | Mass percentage content of PC in the total electrolyte solution /% | Ratio E of mass percentage contents of organic nitrile additive to PC in the total electrolyte solution | Mass percentage content x% of triphenylphosphine oxide in the total electrolyte solution | Mass percentage content y% of biphenyl in the total electrolyte solution | Dry pressing bonding force F between striped coating and cathode material at 40°C | Pass number of hot oven test at 138°C | Gas generation volume at 55°C /ml | Capacity retention rate at the 90th intermittent cycle test (-15°C) /% |
|---|---|---|---|---|---|---|---|---|---|---|
| Embodiment 1-1 | 20 | Succinonitrile, 3.50% | 3.50% | 1 | 3% | 1.50% | 6.5 | 9/10 | 0.32 | 75.00% |
| Embodiment 2-23 | 20 | Adiponitrile, 3.50% | 2.50% | 2 | 3% | 1.50% | 6.3 | 9/10 | 0.31 | 75.20% |
| Embodiment 2-24 | 20 | Hexanenitrile, 3.50% | 2.50% | 2 | 3% | 1.50% | 6.4 | 10/10 | 0.26 | 76.30% |
| Embodiment 2-25 | 20 | Ethylene glycol bis(propionitrile)ether, 3.50% | 2.50% | 2 | 3% | 1.50% | 6.7 | 10/10 | 0.24 | 76.80% |
| Embodiment 2-26 | 20 | Glutaronitrile, 3.60% | 2.50% | 2 | 3% | 1.50% | 5.9 | 7/10 | 0.35 | 74.50% |

In Table 3 above, when different nitrile additive components are selected in the electrolyte solution, the lithium-ion battery has reduced gas generation at 55°C while maintaining good low-temperature intermittent cycle performance and pass rate of hot oven test.

The above description is only preferred embodiments of this application and an illustration of the technique principles employed. It will be understood by those skilled in the art that the scope of the disclosure referred to in this application is not limited to technical solutions resulting from any particular combination of the features described above, but is intended to encompass other technical solutions resulting from any combination of the technical features described above or their equivalents. For example, the above-mentioned features and the technical features with similar functions disclosed in this application are replaced with each other to form a technical solution.

**Claims**

1. A separator, **characterized in that** the separator comprises aluminum atoms and fluorine atoms; in a 2 $\mu$m $\times$ 2 $\mu$m region of a scanning electron microscope image of the separator, a ratio A of an atomic percentage of the aluminum atoms to an atomic percentage of the fluorine atoms satisfies: $1 \leq A \leq 4$; and the separator comprises a substrate, a surface of the substrate is provided with a coating, the coating comprises a plurality of stripes spaced apart from each other, and an average spacing between two adjacent stripes is 1 mm to 3 mm.

2. The separator according to claim 1, **characterized in that** $2 \leq A \leq 3$.

3. The separator according to claim 1 or 2, **characterized in that** the separator further satisfies at least one of the following conditions:

   (1) the average spacing between two adjacent stripes is 1.2 mm to 2.5 mm;
   (2) a thickness of the stripes is 0.5 $\mu$m to 2 $\mu$m;
   (3) the atomic percentage of the aluminum atoms is X% and $17 \leq X \leq 28$; or
   (4) the atomic percentage of the fluorine atoms is Y% and $7 \leq Y \leq 21$.

4. The separator according to claim 1, **characterized in that** in a 1 mm $\times$ 1 mm region of surface of the substrate, a coverage rate of the coating on the surface of the substrate is 15% to 25%.

5. The separator according to claim 1, **characterized in that** at 35°C, a ratio B of a puncture strength of the separator to a puncture strength of the substrate satisfies: $1.1 \leq B \leq 2.0$.

6. An electrochemical apparatus, comprising a positive electrode plate and a negative electrode plate, **characterized in that** the electrochemical apparatus further comprises a separator according to any one of claims 1 to 5, and the separator is disposed between the positive electrode plate and the negative electrode plate.

7. The electrochemical apparatus according to claim 6, **characterized in that** the positive electrode plate comprises a positive electrode material, and at 40°C, a dry pressing bonding force F between the coating and the positive electrode material satisfies: $2 \text{ N/m} \leq F \leq 6.5 \text{ N/m}$.

8. The electrochemical apparatus according to claim 6, **characterized in that** the positive electrode plate comprises a positive electrode material, and a ratio D of particle sizes Dv50 / Dn10 of the positive electrode material satisfies: $20 \leq D \leq 45$.

9. The electrochemical apparatus according to claim 6, **characterized in that** the electrochemical apparatus further comprises an electrolyte solution, the electrolyte solution comprises a nitrile additive and propylene carbonate, a ratio E of mass of the nitrile additive to a mass of the propylene carbonate satisfies: $1 \leq E \leq 5$, and the nitrile additive comprises at least one of adiponitrile, succinonitrile, acetonitrile, or ethylene glycol diethyl ether.

10. The electrochemical apparatus according to claim 9, **characterized in that** $1 \leq E \leq 3$.

11. The electrochemical apparatus according to claim 9, **characterized in that** the electrolyte solution satisfies at least one of the following:

   (1) the electrolyte solution further comprises triphenylphosphine oxide, and a mass of the triphenylphosphine oxide accounts for x% of a total mass of the electrolyte solution, wherein $0 < x \leq 4.5$; or
(2) the electrolyte solution further comprises biphenyl, and a mass of the biphenyl accounts for y% of the total mass of the electrolyte solution, wherein $0.4 \leq y \leq 1.8$.

12. An electronic device, **characterized in that** the electronic device comprises the electrochemical apparatus according to any one of claims 6 to 11.

**EP 4 704 204 A1**

## EUROPEAN SEARCH REPORT

Application Number

EP 25 19 8619

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 007 035 A1 (LG ENERGY SOLUTION LTD [KR]) 1 June 2022 (2022-06-01)<br>* claims 1-11 *<br>* example 1 *<br>* paragraph [0077] *<br>* table 1 *<br>----- | 1-12 | INV.<br>H01M10/0525<br>H01M10/42<br>H01M50/409<br>H01M50/414<br>H01M50/446<br>H01M50/451<br>H01M50/489 |
| Y | EP 4 411 915 A1 (PANASONIC IP MAN CO LTD [JP]) 7 August 2024 (2024-08-07)<br>* paragraph [0142] *<br>----- | 1-12 | |
| A | WO 2024/016952 A1 (EVE POWER CO LTD [CN]) 25 January 2024 (2024-01-25)<br>* claims 1-10 *<br>----- | 1 | |
| A | CN 116 315 457 A (EVE ENERGY CO LTD) 23 June 2023 (2023-06-23)<br>* paragraph [0013] *<br>* claims 1-10 *<br>----- | 1 | |
| A | CN 117 878 405 A (NINGDE AMPEREX TECHNOLOGY LTD) 12 April 2024 (2024-04-12)<br>* claims 1-12 *<br>----- | 9,10 | TECHNICAL FIELDS SEARCHED (IPC)<br><br>H01M |
| A | CN 110 994 029 A (BEIJING INSTITUTE TECH) 10 April 2020 (2020-04-10)<br>* claims 1-8 *<br>----- | 11 | |

The present search report has been drawn up for all claims

| Place of search | Date of completion of the search | Examiner |
|---|---|---|
| The Hague | 9 January 2026 | Reich, Claus |

## ANNEX TO THE EUROPEAN SEARCH REPORT
## ON EUROPEAN PATENT APPLICATION NO.

EP 25 19 8619

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2026

| Patent document cited in search report | | Publication date | Patent family member(s) | | Publication date |
|---|---|---|---|---|---|
| EP 4007035 | A1 | 01-06-2022 | CN | 114270617 A | 01-04-2022 |
| | | | EP | 4007035 A1 | 01-06-2022 |
| | | | JP | 7358620 B2 | 10-10-2023 |
| | | | JP | 2022544490 A | 19-10-2022 |
| | | | KR | 20210020846 A | 24-02-2021 |
| | | | US | 2022294078 A1 | 15-09-2022 |
| | | | WO | 2021034060 A1 | 25-02-2021 |
| EP 4411915 | A1 | 07-08-2024 | CN | 118044022 A | 14-05-2024 |
| | | | EP | 4411915 A1 | 07-08-2024 |
| | | | JP | WO2023054150 A1 | 06-04-2023 |
| | | | US | 2024429561 A1 | 26-12-2024 |
| | | | WO | 2023054150 A1 | 06-04-2023 |
| WO 2024016952 | A1 | 25-01-2024 | NONE | | |
| CN 116315457 | A | 23-06-2023 | NONE | | |
| CN 117878405 | A | 12-04-2024 | CN | 117878405 A | 12-04-2024 |
| | | | WO | 2025145926 A1 | 10-07-2025 |
| CN 110994029 | A | 10-04-2020 | NONE | | |

EPO FORM P0459

For more details about this annex : see Official Journal of the European Patent Office, No. 12/82